# DEMANDE DE BREVET EUROPEEN

(11) **EP 2 085 705 A2**
(43) Date de publication de la demande: **05.08.2009**
(21) Numéro de dépôt: 09305103.5
(22) Date de dépôt: 03.02.2009
(51) Int. Cl.: F24D 3/08, F28D 7/02, F28F 9/22

(54) **Dispositif combiné de climatisation**

(30) Priorité: 04.02.2008 FR 0850681
(71) Demandeur: Ivars, Paul Emile, 40150 Hossegor (FR)
(72) Inventeur: Ivars, Paul Emile, 40150 Hossegor (FR)
(74) Mandataire: Fantin, Laurent

(57) **Abrégé**

L'objet de l'invention est un dispositif combiné de climatisation comprenant un premier circuit (30) dans lequel circule un premier fluide caloporteur, des moyens de refroidissement et/ou de chauffage dudit premier fluide, ainsi qu'un deuxième circuit (32), notamment de chauffage, dans lequel circule un deuxième fluide caloporteur traversant au moins un échangeur, ledit deuxième circuit (32) comportant un premier réservoir (34) dans lequel une portion (36) du premier circuit (30) est disposée et comprenant des moyens d'injection (38) du deuxième fluide dans le premier réservoir (34) sous forme d'un coude (46) de forme hélicoïdale de manière à obtenir un flux tourbillonnant, caractérisé en ce qu'il comprend à l'intérieur du premier réservoir (34) au moins une paroi de séparation (48) de part et d'autre de laquelle ladite portion (36) du premier circuit (30) et le deuxième fluide du deuxième circuit (32) circulent.

## Description

La présente invention se rapporte à un dispositif combiné de climatisation, de préférence réversible, plus particulièrement destiné aux maisons d'habitations et aux logements résidentiels.

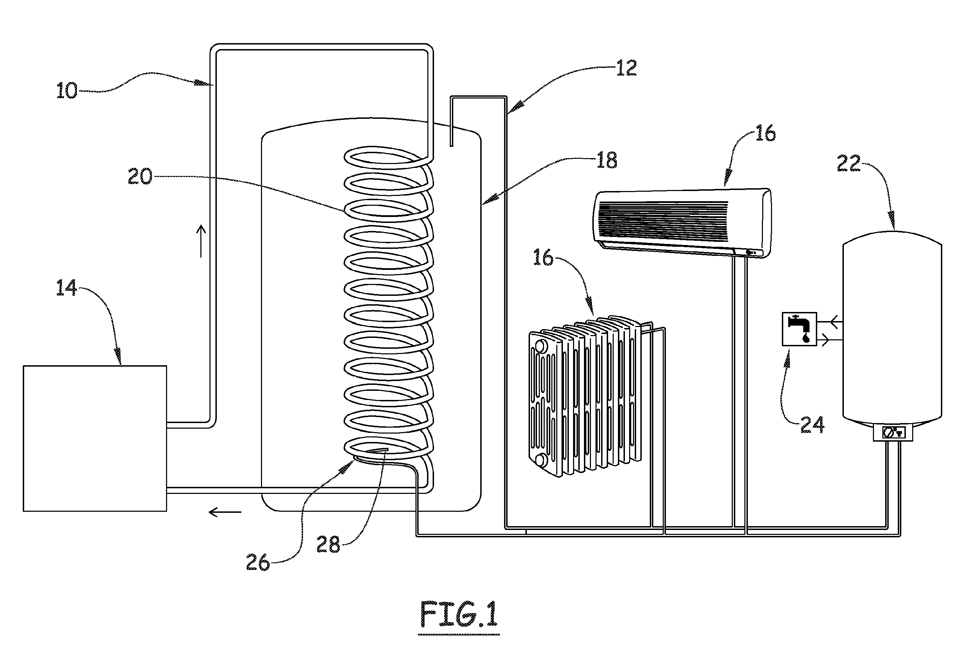

Comme illustré en figure 1, une installation de climatisation selon l'art antérieur comprend généralement un premier circuit 10 dans lequel circule un premier fluide caloporteur et un second circuit 12 dans lequel circule un second fluide caloporteur.

Le premier circuit 10 comprend des moyens 14 de refroidissement ou de chauffage du premier fluide selon l'utilisation du dispositif de climatisation.

Et le second circuit 12 comprend au moins un échangeur 16, tel un radiateur, un ventilo-convecteur, ou un plancher chauffant/rafraîchissant, ainsi qu'un réservoir 18 dans lequel une portion 20 dudit premier circuit 10 est disposée.

Avantageusement, selon l'art antérieur, le second circuit peut aussi être relié à un ballon d'eau chaude 22, ou chauffe-eau, pour produire de l'eau chaude destinée à alimenter un circuit d'eau chaude sanitaire 24.

De plus, toujours selon l'art antérieur, le second fluide caloporteur est injecté dans le réservoir 18 à l'aide de moyens d'agitation 26 destinés à améliorer les échanges thermiques entre le second fluide contenu dans le réservoir 18 et le premier fluide circulant dans la portion 20.

Comme illustré sur la figure 1, ces moyens d'agitation 26 peuvent consister en une arrivée 28 du second fluide caloporteur dans le réservoir 18 en forme de coude, plus précisément de forme hélicoïdale, afin d'animer ledit second fluide caloporteur d'un mouvement hélicoïdal ou tourbillonnant.

Cette solution, de conception simple, permet d'améliorer les échanges thermiques entre les deux fluides caloporteurs et d'obtenir un coefficient de performance pour l'installation de climatisation compatible avec les normes en vigueur.

Toutefois, bien que respectant les normes, une telle installation de climatisation selon l'art antérieur n'est pas dépourvue d'inconvénients.

En effet, ce type d'installation de climatisation se décompose généralement en un groupe extérieur, un module intérieur et différents éléments reliés au second circuit : les échangeurs 16 tels que radiateur, ventilo-convecteur, ou plancher chauffant/rafraîchissant, et le ballon d'eau chaude 22.

Si les différents échangeurs sont aujourd'hui conçus pour s'intégrer agréablement et discrètement dans une habitation, il n'en est pas de même pour le module intérieur et le chauffe-eau.

En effet, le module intérieur et le chauffe-eau sont deux éléments encombrants de l'installation de climatisation que l'on cherche généralement à cacher ou à disposer à l'écart des espaces de vie de l'habitation.

Pour ce faire, on dispose généralement le module intérieur et/ou le chauffe-eau dans un cagibi, un sous-sol ou un local dédié. Cependant, étant donné l'encombrement du module intérieur et du chauffe-eau, il n'est pas toujours possible de les disposer au même endroit.

Par conséquent, plusieurs espaces de l'habitation se trouvent encombrés par l'installation de climatisation, et, de plus, le nombre et la longueur des raccords du second circuit se trouvent multipliés, ce qui augmente les pertes calorifiques de l'installation et donc diminue son coefficient de performance.

Par ailleurs, le coefficient de performance d'une installation de climatisation selon l'art antérieur se trouve limité par des contraintes matérielles.

En effet, la surface d'échange entre le premier et le second circuit est limitée par des contraintes d'encombrement maximal du réservoir 18 ainsi que par les coûts limites de fabrication imposés par le marché.

C'est un objet de la présente invention de pallier les inconvénients de l'art antérieur en proposant un dispositif combiné de climatisation de conception simple, parfaitement adapté au marché des maisons d'habitation et des logements résidentiels, d'encombrement réduit, limitant le nombre de raccords du second circuit et augmentant la surface d'échange entre le premier circuit et le second afin d'améliorer le coefficient de performance.

A cet effet, la présente invention a pour objet un dispositif combiné de climatisation comprenant un premier circuit dans lequel circule un premier fluide caloporteur, des moyens de refroidissement et/ou de chauffage dudit premier fluide, ainsi qu'un deuxième circuit, notamment de chauffage, dans lequel circule un deuxième fluide caloporteur traversant au moins un échangeur, ledit deuxième circuit comportant un premier réservoir dans lequel une portion du premier circuit est disposée et comprenant des moyens d'injection du deuxième fluide dans le premier réservoir en forme de coude de manière à obtenir un flux tourbillonnant, ledit dispositif combiné de climatisation comprenant à l'intérieur du premier réservoir (34) au moins une paroi de séparation (48) de part et d'autre de laquelle ladite portion (36) du premier circuit (30) et le deuxième fluide du deuxième circuit (32) circulent.

D'autres caractéristiques et avantages ressortiront de la description qui va suivre du dispositif de l'invention, description donnée à titre d'exemple uniquement, en regard des dessins annexés sur lesquels :
- la figure 1 est une vue schématique d'une installation de climatisation selon l'art antérieur,
- la figure 2 est une vue en coupe selon un plan vertical d'un dispositif combiné de climatisation selon l'invention.

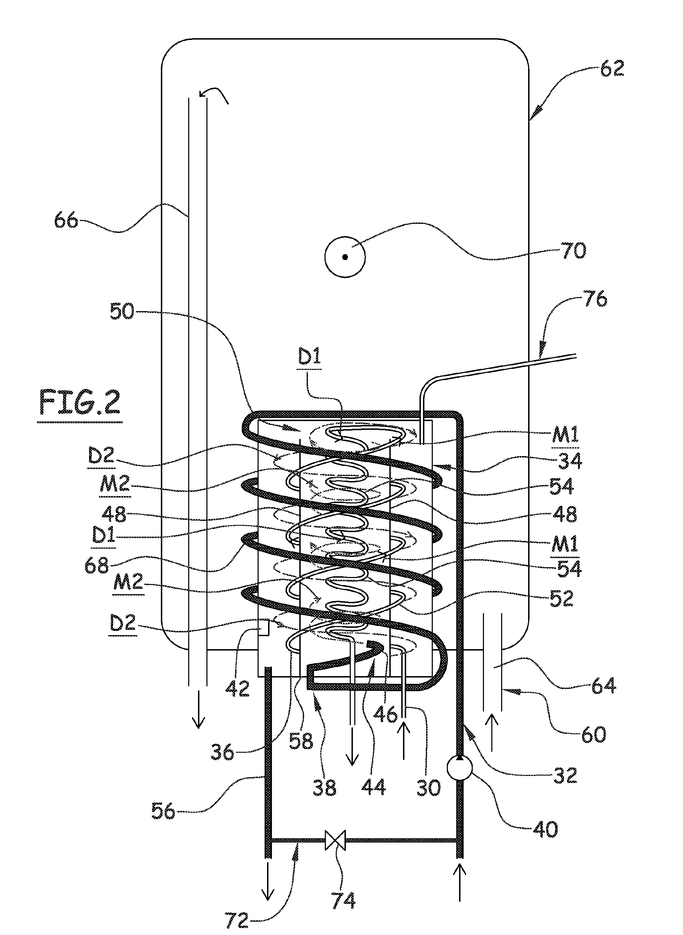

On a schématiquement représenté en figure 2 un dispositif combiné de climatisation selon l'invention.

Ce dispositif combiné de climatisation comprend un premier circuit 30 dans lequel circule un premier fluide caloporteur, par exemple un fluide frigorigène, et des moyens de refroidissement et/ou de chauffage dudit premier fluide selon l'utilisation du dispositif de climatisation.

Le dispositif combiné de climatisation selon l'invention comprend aussi un deuxième circuit 32, par exemple un circuit de chauffage/rafraîchissement, dans lequel circule un deuxième fluide caloporteur, par exemple de l'eau, traversant au moins un échangeur, tel un radiateur ou un ventilo-convecteur, disposé à l'intérieur d'une habitation.

Les caractéristiques techniques des moyens de refroidissement et/ou de chauffage sont déterminées par l'homme du métier en fonction des volumes à climatiser et des échangeurs.

Par échangeur, on entend tout dispositif susceptible d'assurer un transfert thermique entre le second fluide caloporteur circulant dans le deuxième circuit 32 et son environnement, notamment l'air ambiant présent à proximité dudit échangeur. A titre d'exemple, le ou les échangeurs peuvent se présenter sous la forme d'un radiateur statique sèche serviette ou mural, d'une cassette plafonnier, d'un ventilo-convecteur, d'un plancher chauffant/rafraîchissant ou analogue.

Le deuxième circuit 32 comporte un premier réservoir 34 dans lequel est disposée une portion 36 du premier circuit 30 et il comprend des moyens d'injection 38 du deuxième fluide caloporteur dans ledit premier réservoir 34.

Des moyens appropriés, par exemple au moins une pompe 40, sont disposés au niveau de chaque circuit (30,32) pour assurer la circulation du fluide.

Selon un mode de réalisation préféré, des moyens 42 de mesure de la température du deuxième fluide caloporteur sont prévus afin de permettre de réguler le fonctionnement des moyens de refroidissement et/ou de chauffage du premier fluide caloporteur en fonction de la température du deuxième fluide.

De plus, des moyens d'agitation 44 du deuxième fluide caloporteur dans le premier réservoir 34 sont prévus afin de permettre de meilleurs échanges thermiques entre les premier et deuxième fluides caloporteurs.

Avantageusement, les moyens 42 de mesure de la température du deuxième fluide se présentent sous la forme d'un capteur de température disposé au niveau du premier réservoir 34, et ils renseignent les moyens de commande des moyens de refroidissement et/ou de chauffage du premier fluide.

Selon les cas, la régulation peut être faite en « tout ou rien », en fonctionnant par plage de temps, ou de manière variable en ajustant la puissance desdits moyens de refroidissement et/ou de chauffage.

Selon un mode de réalisation préféré et illustré notamment par la figure 2, les moyens d'agitation 44 sont réalisés par l'intermédiaire des moyens d'injection 38 du deuxième fluide caloporteur dans le premier réservoir 34.

Ainsi, le deuxième circuit 32 débouche dans le premier réservoir 34 sous forme d'un coude 46 de forme hélicoïdale, ledit coude 46 s'élevant dans le réservoir 34 en tournant autour d'un axe sensiblement vertical de manière à former une portion d'hélice.

Ce coude 46 en portion d'hélice permet d'obtenir pour le deuxième fluide caloporteur un flux tourbillonnant et perturbé dans le réservoir 34. Cet agencement hélicoïdal permet de ne pas avoir un flux laminaire à l'intérieur dudit premier réservoir et contribue à améliorer les échanges thermiques entre les premier et deuxième fluides caloporteurs, et donc à accroître ainsi le rendement de l'échangeur thermique formé par le premier réservoir 34 et la portion 36 du premier circuit 30.

De préférence, la portion 36 du premier circuit 30 disposée à l'intérieur du premier réservoir 34 prend la forme d'un serpentin de manière à assurer un transfert thermique optimal entre les premier et deuxième fluides caloporteurs. Afin de rendre le premier réservoir 34 plus compact tout en gardant une surface d'échange thermique au moins équivalente entre les premier et deuxième circuits (30,32), au moins une paroi de séparation 48 est prévue à l'intérieur dudit premier réservoir 34.

Cette paroi de séparation 48 consiste en une surface continue ou discontinue libérant au moins un passage 50 en partie supérieure du premier réservoir 34 afin de permettre la circulation de la portion 36 du premier circuit 30 et du deuxième fluide caloporteur de part et d'autre de ladite paroi 48.

Dans un mode de réalisation préféré, le premier réservoir 34 et la paroi de séparation 48 sont sensiblement cylindriques, ladite paroi de séparation 48 étant de diamètre inférieur à celui du réservoir 34.

Afin d'améliorer les échanges thermiques, les premier et deuxième fluides caloporteurs ont des flux à contre courant l'un de l'autre à l'intérieur et à l'extérieur de ladite paroi de séparation 48.

A cet effet, la portion 36 du premier circuit 30 comprend une portion montante 52 à l'extérieur de ladite paroi de séparation 48 et une portion descendante 54 à l'intérieur de ladite paroi de séparation 48, lesdites portions montante 52 et descendante 54 prenant de préférence la forme d'un serpentin.

Ainsi, comme illustré par les flèches M1, le premier fluide caloporteur monte d'abord dans la portion montante 52 du premier circuit, puis, comme illustré par les flèches D1, le premier fluide caloporteur descend ensuite dans la portion descendante 54 du premier circuit 30.

Le deuxième fluide caloporteur est injecté par le coude 46 en partie inférieure du premier réservoir 34, à l'intérieur de la paroi de séparation 48.

Une fois injecté dans le premier réservoir 34 par le coude 46 des moyens d'agitation 44, le flux tourbillonnant, représenté en pointillés, du deuxième fluide monte, comme illustré par les flèches M2, vers la partie supérieure dudit réservoir 34 jusqu'au passage 50 par lequel il se dirige vers l'extérieur de la paroi de séparation 48.

Après le passage 50 en partie supérieure du réservoir 34, le flux du deuxième fluide descend, comme illustré par les pointillés et les flèches D2, le long de l'extérieur de la paroi de séparation 48 et vers la partie inférieure du réservoir 34 pour ressortir ensuite par une évacuation 56 prévue à cet effet au niveau du fond 58 du réservoir 34 et à l'extérieur de la paroi de séparation 48.

Avantageusement, en diminuant la section à travers laquelle s'écoule le deuxième fluide caloporteur à contre courant du flux du premier fluide caloporteur dans le réservoir 34, la paroi de séparation 48 entraîne une baisse de la vitesse d'écoulement dudit deuxième fluide caloporteur, ce qui améliore les échanges thermiques entre les premier et deuxième circuit 30 et 32.

Selon un mode de réalisation préféré de l'invention, les premier et deuxième circuits 30 et 32 sont utilisés pour mettre en température, chauffer ou rafraîchir selon l'utilisation, un troisième fluide, notamment de l'eau, circulant dans un troisième circuit 60, notamment un circuit d'eau chaude sanitaire.

A cet effet, le premier réservoir 34 est disposé en partie inférieure d'un deuxième réservoir 62 du troisième circuit 60.

Ce deuxième réservoir 62, notamment un ballon d'eau chaude sanitaire, possède une grande capacité de stockage, environ 165 litres pour donner un ordre d'idées, afin de permettre la réalisation d'une réserve tampon de troisième fluide mis en température par échange thermique avec les premier et deuxième circuit (30,32).

De préférence, le deuxième réservoir comprend une zone inférieure et une zone supérieure, la zone inférieure étant la zone dans laquelle est présente le premier réservoir 34 et la zone supérieure étant celle dans laquelle est stockée l'eau chaude par stratification. Le volume de la zone supérieure est adapté en fonction des besoins en eau chaude. Le rapport entre la zone supérieure et la zone inférieure découle d'un compromis entre une réserve d'eau chaude suffisante correspondant au volume de la zone supérieure et des échanges satisfaisant entre le premier réservoir et le deuxième réservoir correspondant au volume de la zone inférieure. Avantageusement, le rapport est de l'ordre de d'au plus 1/3 pour la zone inférieure et de l'ordre d'au moins 2/3 pour la zone supérieure.

Selon un mode de réalisation préféré, le troisième circuit 60 comprend une arrivée 64 du troisième fluide en partie inférieure du deuxième réservoir 62 et une évacuation 66 permettant de prélever ledit troisième fluide mis en température en partie supérieure dudit deuxième réservoir 62.

Afin de favoriser les échanges thermiques entre les deuxième et troisième circuits (32,60), le premier réservoir 34 est non isolé à l'intérieur dudit deuxième réservoir 62, et, le deuxième circuit 32 comprend, avant les moyens d'injection 38, une portion 68 disposée à l'intérieur du deuxième réservoir 62 et à l'extérieur du premier réservoir 34.

Avantageusement, ladite portion 68 se présente sous la forme d'un serpentin entourant la paroi extérieure du premier réservoir 34.

Des moyens de calorifugeage sont de préférence prévus au niveau des parois extérieures du deuxième réservoir 62 de manière à limiter les déperditions thermiques.

Selon un mode de réalisation préféré, des moyens 70 de mesure de la température du troisième fluide sont prévus afin de permettre de réguler le fonctionnement des moyens de refroidissement et/ou de chauffage du premier fluide caloporteur en fonction de la température dudit troisième fluide.

Ces moyens 70 de mesure de la température du troisième fluide se présentent sous la forme d'un capteur de température disposé au niveau du deuxième réservoir 62, et ils renseignent les moyens de commande des moyens de refroidissement et/ou de chauffage du premier fluide.

Selon les cas, la régulation peut être faite en « tout ou rien », en fonctionnant par plage de temps, ou de manière variable en ajustant la puissance desdits moyens de refroidissement et/ou de chauffage.

Enfin, afin de toujours assurer une circulation minimale du deuxième fluide caloporteur dans le réservoir 34, un by-pass 72, comprenant au moins une vanne 74, est prévu entre la partie du deuxième circuit située en amont de la pompe 40 et de la portion 68 et la partie du deuxième circuit située en aval de l'évacuation 56.

De plus, des moyens de purge 76 dudit deuxième circuit 32 sont prévus au niveau du premier réservoir 34.

Le dispositif combiné de climatisation selon l'invention est réversible, car les moyens de chauffage/refroidissement du premier circuit peuvent aussi bien être utilisés pour refroidir ou chauffer le premier fluide caloporteur.

Le dispositif combiné de climatisation va maintenant être décrit dans une application correspondant à un mode préféré de réalisation de l'invention.

Ainsi, dans un mode de réalisation préféré de l'invention, le premier fluide caloporteur est du fluide frigorigène mis en température par les des moyens de refroidissement et/ou de chauffage du premier circuit 30, et les deuxième et troisième fluide sont de l'eau.

Dans une application préférée du dispositif combiné climatisation selon l'invention, le deuxième fluide caloporteur est de l'eau de chauffage utilisée dans un circuit de chauffage 32 comprenant au moins un échangeur, et, le deuxième réservoir 62 du troisième circuit 60 est un ballon d'eau chaude sanitaire, couramment nommé chauffe-eau, permettant notamment d'alimenter une habitation en eau chaude sanitaire.

On constate donc que le dispositif selon l'invention permet la réalisation d'une installation de climatisation moins encombrante que celles de l'art antérieur.

En effet, comme évoqué dans le préambule, le module intérieur de ladite installation de climatisation et le chauffe-eau peuvent être regroupés en un seul élément.

De plus, on constate aussi que l'invention permet de diminuer le nombre et la longueur des raccords du deuxième circuit, généralement utilisés pour relier le chauffe-eau audit module intérieur de l'installation, ce qui diminue les pertes calorifiques de l'installation et donc augmente son coefficient de performance.

Ainsi, de manière économique, le dispositif de climatisation selon l'invention permet d'utiliser le premier réservoir 34 non isolé du circuit de chauffage 32 pour produire de l'eau chaude sanitaire.

Cette conception de l'invention permet avantageusement de réduire la consommation des moyens de chauffage/refroidissement du premier circuit 30.

Lors de l'utilisation du dispositif combiné selon l'invention pour chauffer une habitation et produire de l'eau chaude, quand la température de l'eau de chauffage Tc est supérieure à celle de l'eau chaude sanitaire Ts, alors le circuit de chauffage permet de chauffer l'eau chaude sanitaire, tandis que, lorsque la température d'eau chaude sanitaire Ts est supérieure à celle de l'eau de chauffage Tc, alors l'eau chaude sanitaire est utilisée pour préchauffer l'eau du circuit de chauffage.

Lorsque l'on désire uniquement produire de l'eau chaude sans chauffer l'habitation, la vanne 74 du by-pass 72 et la vanne 40 disposés sur le circuit de chauffage 32 sont utilisés afin de court-circuiter ledit circuit de chauffage 32. Ainsi, une circulation de l'eau de chauffage dans la portion 68 et dans le réservoir 34 dudit circuit de chauffage est maintenue, ce qui évite une surchauffe.

Lors de l'utilisation du dispositif combiné selon l'invention pour rafraîchir une habitation et produire de l'eau chaude, les moyens de chauffage/refroidissement sont utilisés une partie de la journée, notamment le jour, pour rafraîchir le fluide frigorigène du premier circuit 30 et donc l'eau circulant vers les échangeurs du deuxième circuit 32.

L'autre partie de la journée, notamment la nuit, est utilisée pour produire de l'eau chaude sanitaire dans le réservoir 62, les moyens de chauffage/refroidissement réchauffant le fluide frigorigène du premier circuit et/ou le deuxième circuit étant utilisé pour récupérer de la chaleur dans l'habitation. L'eau chaude sanitaire produite pendant la nuit est conservée le jour dans le réservoir 62 par stratification, l'eau sanitaire restant chaude en partie supérieure du réservoir 62.

Enfin, grâce aux moyens (42,70) de mesure de la température de l'eau de chauffage et de l'eau chaude sanitaire présents dans les premier et deuxième réservoirs (34,62), à des moyens de mesure de la température du fluide frigorigène et/ou à des moyens de mesure de la température ambiante, une régulation optimale et un fonctionnement économique des moyens de chauffage peuvent être obtenus.

Bien entendu, l'invention n'est évidement pas limitée au mode de réalisation représenté et à l'application qui ont été décrits ci-dessus, mais en couvre au contraire toutes les variantes, notamment en ce qui concerne les dimensions des réservoirs, les fluides caloporteurs, les moyens de chauffage ou de refroidissement des fluides, la forme des circuits ainsi que le type d'échangeur.

## Revendications

1. Dispositif combiné de climatisation comprenant un premier circuit (30) dans lequel circule un premier fluide caloporteur, des moyens de refroidissement et/ou de chauffage dudit premier fluide, ainsi qu'un deuxième circuit (32), notamment de chauffage, dans lequel circule un deuxième fluide caloporteur traversant au moins un échangeur, ledit deuxième circuit (32) comportant un premier réservoir (34) dans lequel une portion (36) du premier circuit (30) est disposée et comprenant des moyens d'injection (38) du deuxième fluide dans le premier réservoir (34) sous forme d'un coude (46) de forme hélicoïdale de manière à obtenir un flux tourbillonnant, **caractérisé en ce qu'**il comprend à l'intérieur du premier réservoir (34) au moins une paroi de séparation (48) de part et d'autre de laquelle ladite portion (36) du premier circuit (30) et le deuxième fluide du deuxième circuit (32) circulent.

2. Dispositif combiné de climatisation selon la revendication 1, **caractérisé en ce que** le premier fluide caloporteur et le deuxième fluide caloporteur ont des flux à contre courant l'un de l'autre à l'intérieur et à l'extérieur de ladite paroi de séparation (48).

3. Dispositif combiné de climatisation selon la revendication 1 ou 2, **caractérisé en ce que** le premier circuit (30) comprend une portion montante (52) à l'extérieur de la paroi de séparation (48) et une portion descendante (54) à l'intérieur de ladite paroi (48), et **en ce que** le deuxième fluide caloporteur circule de façon montante à l'intérieur de la paroi de séparation (48) et de façon descendante à l'extérieur de ladite paroi (48).

4. Dispositif combiné de climatisation selon la revendication 3, **caractérisé en ce que** la portion montante (52) et la portion descendante (54) du premier circuit (30) se présentent sous la forme d'un serpentin.

5. Dispositif de production d'eau chaude intégrant un dispositif de climatisation combiné selon l'une quelconque des revendications 1 à 4, ledit dispositif de production d'eau chaude comprenant un réservoir (62) d'eau chaude, notamment un ballon d'eau chaude sanitaire, et un circuit (60) d'eau chaude **caractérisé en ce qu'**il comprend un premier circuit (30) dans lequel circule un premier fluide caloporteur, des moyens de refroidissement et/ou de chauffage dudit premier fluide, ainsi qu'un deuxième circuit (32), notamment de chauffage, dans lequel circule un deuxième fluide caloporteur traversant au moins un échangeur, ledit deuxième circuit (32) comportant un premier réservoir (34) dans lequel une portion (36) du premier circuit (30) est disposée et comprenant des moyens d'injection (38) du deuxième fluide dans le premier réservoir (34) sous forme d'un coude (46) de forme hélicoïdale de manière à obtenir un flux tourbillonnant, **en ce qu'**il comprend à l'intérieur du premier réservoir (34) au moins une paroi de séparation (48) de part et d'autre de laquelle ladite portion (36) du premier circuit (30) et le deuxième fluide du deuxième circuit (32) circulent et **en ce que** le premier réservoir (34) est non isolé et disposé dans le réservoir (62) d'eau chaude.

6. Dispositif de production d'eau chaude intégrant un dispositif de climatisation combiné selon la revendication 5, **caractérisé en ce que** le premier réservoir (34) est disposé en partie inférieure du réservoir d'eau chaude (62).

7. Dispositif de production d'eau chaude intégrant un dispositif de climatisation combiné selon la revendication 5 ou 6, **caractérisé en ce que** le deuxième circuit (32) comprend, avant les moyens d'injection (38), une portion (68) disposée à l'intérieur du réservoir d'eau chaude (62) et à l'extérieur du premier réservoir (34).

8. Dispositif de production d'eau chaude intégrant un dispositif de climatisation combiné selon la revendication 7, **caractérisé en ce que** ladite portion (68) se présente sous la forme d'un serpentin entourant la paroi latérale extérieure du premier réservoir (34).

9. Dispositif de production d'eau chaude intégrant un dispositif de climatisation combiné selon l'une quelconque des revendications 5 à 8, **caractérisé en ce que** des moyens (42,70) de mesure de la température du deuxième fluide, respectivement du troisième fluide, sont prévus dans le premier réservoir (34), respectivement le réservoir d'eau chaude (62), afin de permettre de réguler le fonctionnement des moyens de refroidissement et/ou de chauffage du premier fluide caloporteur.
